# EUROPEAN PATENT APPLICATION

(11) **EP 4 818 948 A1**
(43) Date of publication of application: **07.10.2026**
(21) Application number: 25209648.2
(22) Date of filing: 20.10.2025
(51) Int. Cl.: G06F 21/57, H04L 9/40, G06F 21/60, G06F 21/64

(54) **IT ASSET MANAGEMENT METHOD AND SYSTEM**

(30) Priority: 01.04.2025 KR 20250041985
(71) Applicant: Samsung SDS Co., Ltd., Seoul 05510 (KR)
(72) Inventor: Choi, Jong Hyun, Seoul 05510 (KR); Lee, Chang Hoon, Seoul 05510 (KR); Yoon, Hyo Jin, Seoul 05510 (KR); Kim, Eun Kyung, Seoul 05510 (KR); Yu, Hun Hee, Seoul 05510 (KR); Cho, Ji Hoon, Seoul 05510 (KR)
(74) Representative: GLAWE DELFS MOLL

(57) **Abstract**

An Information Technology (IT) asset management method, which is performed by a computing system, the IT asset management method may comprise acquiring information on one or more cryptographic elements applied to an IT asset, determining the number of vulnerabilities of each of the one or more cryptographic elements, and determining a security priority of the IT asset by using information on the number of vulnerabilities of each of the one or more cryptographic elements applied to the IT asset.

## Description

### BACKGROUND

### Technical Field

The present disclosure relates to an Information Technology (IT) asset management method, and more particularly, to an IT asset management method for protecting IT assets from security threats.

### Description of the Related Art

Information Technology (IT) assets acts as key elements in the modern digital environment, and include various elements directly related to management and security of an organization. Typically, IT assets such as codes, libraries, application programs, files, operating systems, containers, and systems contain inherent cryptographic elements, such as algorithms, protocols, and certificates. Since these cryptographic elements are important to determine security of the IT assets, it is essential to effectively identify and systematically manage these cryptographic elements.

However, most IT asset management systems and security systems do not automatically determine security priorities to preferentially protect IT assets. This is caused by the problem of not being able to accurately identify the cryptographic elements applied to each IT asset. The existing IT asset management systems and security systems have limitations in that it is difficult to effectively grasp correlation between IT assets and cryptographic elements. In other words, in the current IT asset management methods, it is difficult to clearly identify which cryptographic elements an individual IT asset contains. Furthermore, when a vulnerability is discovered in a specific cryptographic element, it is difficult to quickly find the IT assets that use the corresponding element. The above issues make it difficult to respond immediately when a security threat occurs, resulting in a situation that makes leave security vulnerabilities unattended. This can pose a serious threat to the information protection of companies and organizations, and can even lead to security incidents such as data leakage and system infringement.

Therefore, a system capable of accurately identifying cryptographic elements within an IT asset and automatically determining a security priority of the IT asset will be required.

### BRIEF SUMMARY

An object of the present disclosure is to provide an Information Technology (IT) asset management method and system for automatically determining a security priority of IT assets.

Another object of the present disclosure is to provide an IT asset management method and system for accurately determining a security priority of IT assets.

Other object of the present disclosure is to provide an IT asset management method and system for determining a security priority of an IT asset to which a replaced cryptographic element is applied when the cryptographic element applied to the IT asset is replaced by a specific condition.

The objects of the present disclosure are not limited to those mentioned above and additional objects of the present disclosure, which are not mentioned herein, will be clearly understood by those skilled in the art from the following description of the present disclosure.

According to an aspect of the present disclosure, there is provided an IT asset management method, which is performed by a computing system. The IT asset management method comprises: acquiring information on one or more cryptographic elements applied to an IT asset, determining a number of vulnerabilities of each of the one or more cryptographic elements, and determining a security priority of the IT asset by using information on the number of vulnerabilities of each of the one or more cryptographic elements applied to the IT asset.

In some embodiments, the IT asset management method further comprises acquiring a security level of data handled by the IT asset, wherein the determining the security priority includes determining the security priority of the IT asset by further using the security level.

In some embodiments, the determining the security priority includes acquiring a risk evaluation score of the IT asset by using the information on the number of vulnerabilities of each cryptographic element applied to the IT asset and the security level, and determining a relatively high security priority of an IT asset handling data having a high security level with respect to IT assets having the same risk evaluation score.

In some embodiments, the IT asset management method further comprises acquiring a usage network type of the IT asset, the determining the security priority includes determining the security priority of the IT asset by further using the usage network type of the IT asset, and the usage network type includes a private network and a public network.

In some embodiments, the determining the security priority includes acquiring a risk evaluation score of the IT asset by using the information on the number of vulnerabilities of each cryptographic element applied to the IT asset and the usage network type of the IT asset, and determining a relatively high security priority of the IT asset, which uses the public network, with respect to IT assets having the same risk evaluation score.

In some embodiments, the IT asset management method further comprises comprising acquiring a shelf-life-time of the IT asset, the shelf-life-time being a deadline for the IT asset to be effectively maintained in security, wherein the determining the security priority includes determining the security priority of the IT asset by further using the shelf-life-time of the IT asset.

In some embodiments, the determining the security priority includes acquiring a risk evaluation score of the IT asset by using the information on the number of vulnerabilities of each cryptographic element applied to the IT asset and the shelf-life-time of the IT asset, and determining a relatively high security priority of the IT asset with a short shelf-life-time with respect to IT assets having the same risk evaluation score.

In some embodiments, the IT asset management method further comprises acquiring a security level of data handled by the IT asset, a usage network type of the IT asset, and a shelf-life-time of the IT asset, the shelf-life-time being a deadline for the IT asset to be effectively maintained in security, the determining the security priority includes acquiring a risk evaluation score of the IT asset, the risk evaluation score meaning a result acquired by subtracting a value obtained by multiplying a sum value of a score corresponding to the shelf-life-time and a score corresponding to the usage network type by the number of vulnerabilities and a preset coefficient, from a score corresponding to the security level, and the usage network type includes a private network and a public network.

In some embodiments, the acquiring the information on one or more cryptographic elements includes: acquiring an analysis range corresponding to a type of the IT asset, and acquiring the information on the one or more cryptographic elements applied to the IT asset in accordance with the acquired analysis range.

In some embodiments, the acquiring the information on one or more cryptographic elements includes: acquiring an analysis module corresponding to a type of the IT asset, and acquiring the information on the one or more cryptographic elements applied to the IT asset by using the acquired analysis module.

In some embodiments, the IT asset management method further comprises: replacing a cryptographic element having the determined number of vulnerabilities of a reference value or more with a different cryptographic element when the determined number of vulnerabilities is the reference value or more, and re-determining the security priority of the IT asset by using information on the number of vulnerabilities of the replaced cryptographic element.

In some embodiments, the IT asset management method further comprises: replacing at least one cryptographic element applied to the IT asset with a different cryptographic element when a total sum of the determined number of vulnerabilities of each of the one or more cryptographic elements is a reference value or more, and re-determining the security priority of the IT asset by using information on the vulnerability of the replaced cryptographic element.

In some embodiments, the IT asset management method further comprises: automatically performing a predefined response process for a cryptographic element having the number of vulnerabilities greater than or equal to a reference value when the determined number of vulnerabilities is greater than or equal to the reference value, and re-determining the security priority of the IT asset after the predefined response process is performed.

According to another aspect of the present disclosure, there is provided an IT asset management system. The IT asset management system comprises: a processor, a network interface, a memory, and a computer program loaded into the memory and executed by the processor, wherein the computer program includes: instructions of acquiring information on one or more cryptographic elements applied to an IT asset, instructions of determining a number of vulnerabilities of each of the one or more cryptographic elements, and instructions of determining a security priority of the IT asset by using information on the number of vulnerabilities of each of the one or more cryptographic elements applied to the IT asset.

In some embodiments, the computer program further includes instructions of acquiring a security level of data handled by the IT asset, and the instructions of determining the security priority include instructions of determining the security priority of the IT asset by further using the security level.

In some embodiments, the instructions of determining the security priority include instructions of acquiring a risk evaluation score of the IT asset by using the information on the number of vulnerabilities of each cryptographic element applied to the IT asset and the security level, and instructions of determining a relatively high security priority of an IT asset handling data having a high security level with respect to IT assets having the same risk evaluation score.

In some embodiments, the computer program further includes instructions of acquiring a usage network type of the IT asset, the instructions of determining the security priority include instructions of determining the security priority of the IT asset by further using the usage network type of the IT asset, and the usage network type includes a private network and a public network.

In some embodiments, the instructions of determining the security priority include instructions of acquiring a risk evaluation score of the IT asset by using the information on the number of vulnerabilities of each cryptographic element applied to the IT asset and the usage network type of the IT asset, and instructions of determining a relatively high security priority of the IT asset, which uses the public network, with respect to IT assets having the same risk evaluation score.

In some embodiments, the computer program further includes instructions of acquiring a shelf-life-time of the IT asset, the shelf-life-time being a deadline for the IT asset to be effectively maintained in security, and the instructions of determining the security priority include instructions of determining the security priority of the IT asset by further using the shelf-life-time of the IT asset.

In some embodiments, the instructions of determining the security priority include instructions of acquiring a risk evaluation score of the IT asset by using the information on the number of vulnerabilities of each cryptographic element applied to the IT asset and the shelf-life-time of the IT asset, and instructions of determining a relatively high security priority of the IT asset with a short shelf-life-time with respect to IT assets having the same risk evaluation score.

According to still another aspect of the present disclosure, there is provided an IT asset management system in a computing system. The IT asset management system comprises: an IT asset storage system storing an IT set and one or more cryptographic elements to which the IT asset is applied, and a cryptographic element management system determining a security priority of the IT asset, wherein the cryptographic element management system acquires information on one or more cryptographic elements applied to the IT asset, determines a number of vulnerabilities of each of the one or more cryptographic elements, and determines the security priority of the IT asset by using information on the number of vulnerabilities of each of the one or more cryptographic elements applied to the IT asset.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a schematic diagram illustrating an Information Technology (IT) asset management system according to one embodiment of the present disclosure;
FIG. 2 is a flow chart illustrating an IT asset management method according to another embodiment of the present disclosure;
FIG. 3 is a view illustrating a relation among an IT asset, a cryptographic element applied to the IT asset, and vulnerabilities contained in the cryptographic element, in some embodiments;
FIG. 4 is a view illustrating vulnerabilities in a cryptographic element applied to an IT asset, in some embodiments;
FIGS. 5 and 6 are detailed views illustrating some operations of the IT asset management method described with reference to FIG. 2;
FIG. 7 is a view illustrating an example in which information related to an IT asset is output to a user terminal in some embodiments;
FIG. 8 is a view illustrating an example of information on an IT asset in some embodiments;
FIG. 9 is a view illustrating an example of a cryptographic element applied to an IT asset in some embodiments;
FIG. 10 is a view illustrating an example of tag information including characteristics of an IT asset in some embodiments;
FIG. 11 is a view illustrating a method of calculating a risk evaluation score of an IT asset in some embodiments; and
FIG. 12 is a hardware schematic diagram illustrating a computing device described in some embodiments of the present disclosure.

### DETAILED DESCRIPTION

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, some embodiments of the present disclosure will be described with reference to the drawings.

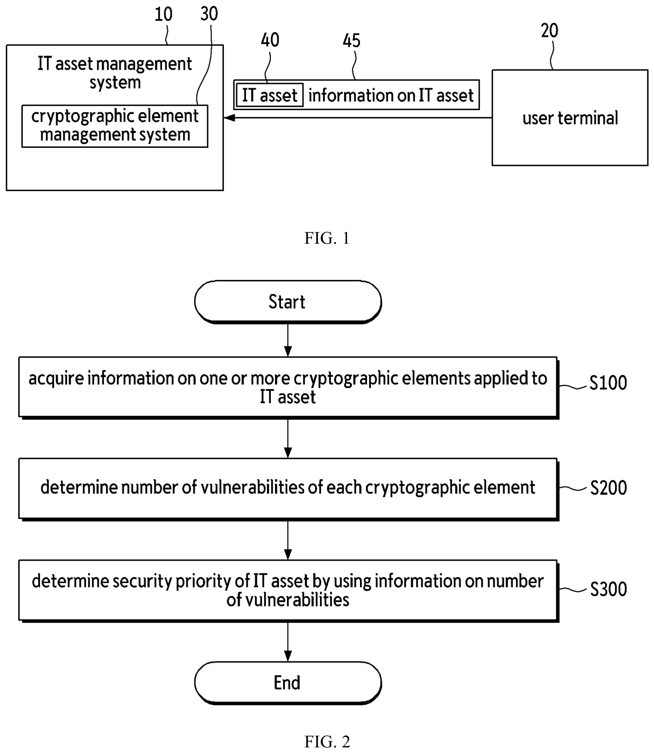

First, a configuration and operation of an Information Technology (IT) asset management system according to one embodiment of the present disclosure will be described with reference to FIG. 1. FIG. 1 is a schematic diagram illustrating an IT asset management system according to one embodiment of the present disclosure.

An IT asset management system 10 according to the present embodiment may acquire information 45 on an IT asset 40 from a user terminal 20. In some embodiments, the IT asset management system 10 may mean a computing server for managing the IT asset 40. In some embodiments, the user terminal 20 may mean a computing device for transmitting the information 45 on a user's IT asset 40 to the IT asset management system 10. For example, the user terminal 20 may mean a desktop or a mobile phone terminal.

In some embodiments, the IT asset management system 10 may include a cryptographic element management system 30. The cryptographic element management system 30 is a system within the IT asset management system 10, and may automatically determine a security priority of the IT asset 40.

In some other embodiments, the cryptographic element management system 30 may operate as a separate system from the IT asset management system 10. In this case, the IT asset management system 10 may store the information 45 on the IT asset 40, and the cryptographic element management system 10 may store one or more cryptographic elements to which the IT asset 40 is applied, and may automatically determine the security priority of the IT asset 40.

In some embodiments, the IT asset 40 is hardware and software used in an organization, and may include source codes, libraries, application programs, files, operating systems, containers, servers, systems, and the like.

The IT asset management system 10 according to one embodiment of the present disclosure may acquire one or more cryptographic elements applied to the IT asset 40. The cryptographic element may mean an element for encryption of the IT asset 40. For example, the cryptographic element may mean a security algorithm, a security protocol, and a security certificate. In some embodiments, the cryptographic element may be acquired through a telecommunication line. In some other embodiments, the cryptographic element may be acquired by analyzing the IT asset 40. In addition, in some embodiments, acquiring one or more cryptographic elements applied to the IT asset 40 by the IT asset management system 10 may have the same meaning as identifying one or more cryptographic elements applied to the IT asset 40.

In some embodiments, the IT asset management system 10 may determine the number of vulnerabilities of each of the cryptographic elements. The vulnerability may mean a weakness among the cryptographic elements, which an attacker may disable the security of the system of the IT asset or decrypt data included in the IT asset. In one example, a vulnerability in the security algorithm is a weakness occurring from a defect in the algorithm itself or a key management issue, and may mean that encrypted data may be decrypted. In another example, a vulnerability in the security certificate is a weakness that may occur due to the use of a wrong certificate or poor certificate management, and may mean that safety of data is not guaranteed. In another example, a vulnerability in the security protocol is a weakness occurring from a defect or implementation error of the protocol itself, and may mean that data cannot be protected from an attacker.

In some embodiments, the IT asset management system 10 may determine the security priority of the IT asset 40 by using information on the number of vulnerabilities of each cryptographic element applied to the IT asset 40. The security priority of the IT asset 40 may mean a priority as to whether the IT asset 40 is considered as an important IT asset to preferentially protect and manage. In some embodiments, IT assets that are important to the user or vulnerable to the attacker may have a higher security priority. In addition, high encryption strength and high security measures may be performed for the IT asset 40 having a high security priority. According to the present embodiment, since the IT asset management system 10 may preferentially protect and manage important IT assets, the IT asset management system 10 may efficiently utilize limited security resources.

In some embodiments, the IT asset management system 10 may determine the security priority of the IT asset 40 based on the sum of the number of vulnerabilities of each cryptographic element applied to the IT asset 40.

In some other embodiments, the IT asset management system 10 may determine the security priority of the IT asset 40 based on a maximum value among the number of vulnerabilities of each cryptographic element applied to the IT asset 40.

In some other embodiments, the IT asset management system 10 may determine the security priority of the IT asset 40 based on an average of the number of vulnerabilities of cryptographic elements applied to the IT asset 40.

The IT asset management system according to the present embodiment will be understood in more detail with reference to other embodiments that will be described later. In addition, the technical spirits that can be understood through the above-described embodiments of the IT asset management system according to the present embodiment may be reflected in other embodiments that will be described later, even though not specified separately.

Next, an IT asset management method according to another embodiment of the present disclosure will be described with reference to FIG. 2. FIG. 2 is a flow chart illustrating an IT asset management method according to another embodiment of the present disclosure. The IT asset management method according to the present embodiment may be performed by a computing device. For example, in the IT asset management method according to the present embodiment, all operations may be performed by one computing device, or may be performed by a plurality of computing devices. That is, a portion of the IT asset management method according to the present embodiment may be performed by a first computing device, and the other portion thereof may be performed by a second computing device. Hereinafter, in describing each operation, description of a subject of each operation may be omitted, and in this case, it may be understood that the subject of the operation is the computing device. In addition, it should be noted that the embodiments related to the IT asset management system described with reference to FIG. 1 may be applied to the IT asset management method according to the present embodiment even through there is no separate mention.

Information on one or more cryptographic elements applied to the IT asset may be acquired (S100).

In some embodiments, the IT asset may be acquired in the form of a spreadsheet file. In some other embodiments, the IT asset may be acquired in the form of a CSV file. In some other embodiments, the IT asset may be acquired by input of the user.

In some embodiments, the information on the cryptographic elements may be acquired by a cryptographic element analyzer. For example, the information on the cryptographic elements may be acquired by a code analyzer, a library analyzer, a process analyzer, a protocol analyzer, an application analyzer, a container analyzer, and a firmware analyzer.

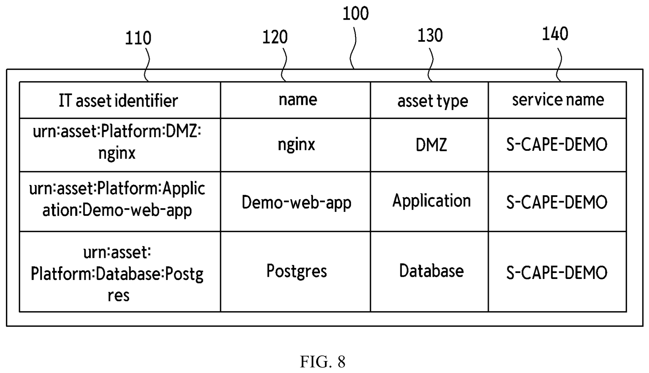

In some embodiments, information on the IT asset may include information on at least some of an IT asset identifier, an IT asset name, an IT asset type, and an IT asset service. A detailed description of the above-described information on the IT asset will be described later with reference to FIG. 8.

In some embodiments, the acquired information on the cryptographic elements may be stored for each IT asset. In one example, when the acquired cryptographic element is a security algorithm, an encryption type, an algorithm name, an algorithm operation mode, a padding schema, a key length, an encryption security strength, a quantum resistant encryption security strength, and the like may be stored as the information on the cryptographic elements. In another example, when the acquired cryptographic element is a security certificate, a certificate format, a certificate name, a certificate validity period, and the like may be stored as the information on the cryptographic elements. In another example, when the acquired cryptographic element is a security protocol, a protocol type, a protocol version, an encryption algorithm, an encryption suite, and the like may be stored as the information on the cryptographic elements.

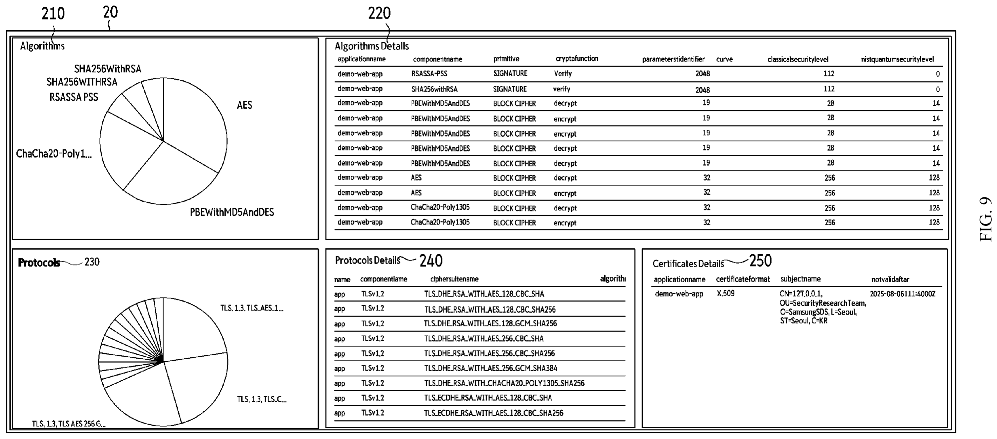

In some embodiments, the acquired information on the cryptographic elements may be stored in a normalized format. For example, the acquired information on the cryptographic elements may be stored in the form of a CSV file. In another example, the acquired information on the cryptographic elements may be stored in the form of an Excel file. In another example, the acquired information on the cryptographic elements may be stored in the form of a cryptography bill of materials (CBOM). The cryptographic elements will be described in detail with reference to FIG. 9 that will be described later.

In some embodiments, only one cryptographic element may be applied to the IT asset. However, the IT asset and the cryptographic element do not always correspond to each other on a one-to-one basis, and one cryptographic element may be applied to a plurality of IT assets. In some other embodiments, a plurality of cryptographic elements may be applied to the IT asset. The plurality of cryptographic elements may be not only dependent on and applied to one IT asset, but also applied to a plurality of IT assets in common.

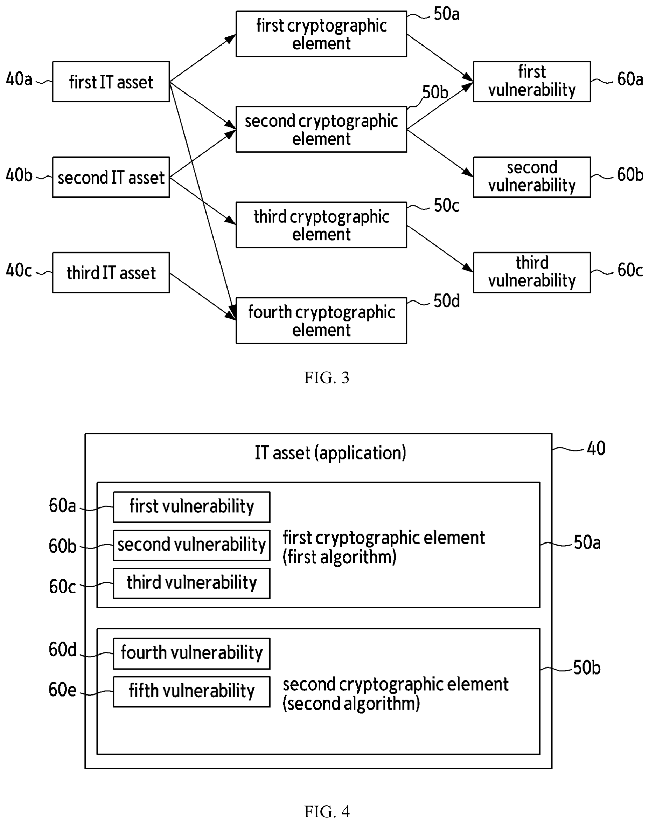

A relation between the above-described IT asset and the cryptographic element will be described with reference to FIG. 3 in more detail. FIG. 3 is a view illustrating a relation among an IT asset, a cryptographic element applied to the IT asset, and vulnerabilities contained in the cryptographic element, in some embodiments.

Referring to FIG. 3, a first cryptographic element 50a, a second cryptographic element 50b, and a fourth cryptographic element 50d may be applied to a first IT asset 40a, the second cryptographic element 50b and a third cryptographic element 50c may be applied to a second IT asset 40b, and only the fourth cryptographic element 50d may be applied to a third IT asset 40c. That is, a plurality of cryptographic elements may be applied to one IT asset, and a single cryptographic element may be applied to a plurality of IT assets.

Also, in some embodiments, as shown in FIG. 3, one vulnerability may appear in common in a plurality of cryptographic elements. For example, the first cryptographic element 50a may have a first vulnerability 60a, the second cryptographic element 50b may have a first vulnerability 60a and a second vulnerability 60b, and the third cryptographic element 50c may have a third vulnerability 60c. In this case, the first vulnerability 60a may appear in common in the first cryptographic element 50a and the second cryptographic element 50b.

In some embodiments, when one vulnerability appears in common in a plurality of cryptographic elements, one vulnerability may be calculated as a single number when the total sum of the number of vulnerabilities of each cryptographic element applied to the IT asset is calculated. For example, when the first vulnerability 60a may appear in common in the first cryptographic element 50a and the second cryptographic element 50b, the total sum of the number of vulnerabilities of each cryptographic element applied to the first IT asset 40a may be calculated as one.

In some other embodiments, when one vulnerability appears in common in a plurality of cryptographic elements, the number of vulnerabilities of each cryptographic element may be calculated individually and summed when the total sum of the number of vulnerabilities of each cryptographic element applied to the IT asset is calculated. For example, when the first vulnerability 60a may appear in common in the first cryptographic element 50a and the second cryptographic element 50b, the total sum of the number of vulnerabilities of each cryptographic element applied to the first IT asset 40a may be calculated as two.

In some other embodiments, when one vulnerability appears in common in a plurality of cryptographic elements, a weight value may be applied depending on the number of repetitive vulnerabilities when the total sum of the number of vulnerabilities of each cryptographic element applied to the IT asset is calculated. In some embodiments, the weight value may mean a numerical value to which a reciprocal of the number of repetitive vulnerabilities is applied. For example, when the first vulnerability 60a appears in the first cryptographic element 50a and the second cryptographic element 50b, the second vulnerability 60b appears in the first cryptographic element 50a and the third cryptographic element 50c, and the third vulnerability 60c appears in the first cryptographic element 50a, the second cryptographic element 50b, and the third cryptographic element 50c, the number of vulnerabilities corresponding to the first vulnerability 60a may be 1/2, the number of vulnerabilities corresponding to the second vulnerability 60b may be 1/2, and the number corresponding to the third vulnerability 60c may be 1/3. That is, the total sum of the number of vulnerabilities in the first cryptographic element 50a, the second cryptographic element 50b, and the third cryptographic element 50c may be 1/2 + 1/2 + 1/3.

Hereinafter, the IT asset management method according to the present embodiment will be described with reference to FIG. 2 back.

In the IT asset management method according to the present embodiment, the number of vulnerabilities of each of the cryptographic elements may be determined (S200).

In some embodiments, the number of vulnerabilities of each of the cryptographic elements may be determined by referring to common vulnerabilities and exposures (CVE) corresponding to a vulnerability database in which information on the vulnerability of the cryptographic element is stored. In some other embodiments, the number of vulnerabilities of each of the cryptographic elements may be determined by a predefined internal policy. For example, when the cryptographic element is an encryption protocol, it may be predefined as an internal policy that the cryptographic protocol has a vulnerability when it is a TLS 1.0 version.

In the IT asset management method according to the present embodiment, the security priority of the IT asset may be determined using the information on the number of vulnerabilities of each of the cryptographic elements applied to the IT asset (S300). According to the present embodiment, the security priority between IT assets that may be used in several environments with the same configuration are determined so that important IT assets may be preferentially protected, and thus it is possible to quickly respond to the encryption security threat.

In some embodiments, a security level of data handled by the IT asset may be acquired, and the security priority of the IT asset may be determined by further using the security level. That is, the security priority of the IT asset may be determined using the security level and the information on the number of vulnerabilities of each of the cryptographic elements to which the IT asset is applied. For example, the security level of data handled by the IT asset is one of Public - Sensitive - Confidential - Secret - Top-Secret, and when the security level of data handled by the IT asset is Top-Secret, the security priority of the IT asset may be determined higher than that of Public. The data handled by the IT asset may mean, for example, financial records, personal information, and the like. In some embodiments, a risk evaluation score of the IT asset may be acquired using the information on the number of vulnerabilities of each cryptographic element applied to the IT asset and the security level. In addition, for IT assets having the same risk evaluation score, the security priority of the IT asset handling data having a high security level may be determined relatively high. The risk evaluation score may be acquired before the security priority of the IT asset is determined, and may be a factor to consider when determining the security priority of the IT asset.

In some other embodiments, a usage network type of the IT asset may be acquired, and the security priority of the IT asset may be determined by further using the usage network type of the IT asset. That is, the security priority of the IT asset may be determined using the usage network type of the IT asset and the information on the number of vulnerabilities of each of the cryptographic elements to which the IT asset is applied. The usage network type of the IT asset may include a private network and a public network. In some embodiments, the risk evaluation score of the IT asset may be acquired using the information on the number of vulnerabilities of each cryptographic element applied to the IT asset and the usage network type of the IT asset, and the security priority of the IT asset, which uses the public network, may be determined to be relatively high for IT assets having the same risk evaluation score. According to the present embodiments, security resources may be efficiently allocated by preferentially protecting IT assets which use the public network that is exposed to the public and more vulnerable to attack than the private network.

In some other embodiments, a shelf-life-time of the IT asset may be acquired, and the security priority of the IT asset may be determined by further using the shelf-life-time of the IT asset. That is, the security priority of the IT asset may be determined using the shelf-life-time of the IT asset and the information on the number of vulnerabilities of each cryptographic element to which the IT asset is applied. The shelf-life-time may mean a deadline for the IT asset to be effectively maintained for security. In addition, in some embodiments, the risk evaluation score of the IT asset may be acquired using the information on the number of vulnerabilities of each cryptographic element applied to the IT asset and the shelf-life-time of the IT asset, and for IT assets having the same risk evaluation score, the security priority of the IT asset having a short shelf-life-time may be determined relatively high. According to the present embodiments, security resources may be efficiently allocated by preferentially protecting IT assets with little shelf-life-time.

In some embodiments, when the number of determined vulnerabilities is greater than or equal to a reference value, a cryptographic element having a number of vulnerabilities greater than or equal to the reference value may be replaced with a different cryptographic element. In addition, the security priority of the IT asset may be determined using information on the number of vulnerabilities of the replaced cryptographic element. For example, when a specific cryptographic element applied to a specific IT asset has five or more vulnerabilities, the specific cryptographic element may be replaced with a cryptographic element having vulnerabilities less than five, which may reduce the security priority of the specific IT asset.

In some other embodiments, when the total sum of the number of determined vulnerabilities of each of the cryptographic elements is greater than or equal to the reference value, at least one cryptographic element applied to the IT asset may be replaced with a different cryptographic element. In addition, the security priority of the IT asset may be determined using the information on vulnerability of the replaced cryptographic element. For example, when the total number of vulnerabilities of each cryptographic element applied to a specific IT asset is greater than or equal to 30, at least one of the cryptographic elements applied to the specific IT asset may be replaced with a different cryptographic element, thereby lowering the security priority of the specific IT asset. In some embodiments, the at least one replaced cryptographic element may be a cryptographic element having a number of vulnerabilities greater than or equal to the reference value among the cryptographic elements applied to the specific IT asset.

In some other embodiments, when the number of determined vulnerabilities is greater than or equal to the reference value, a predefined response process may be automatically performed for the cryptographic element having a number of vulnerabilities greater than or equal to the reference value. In addition, the security priority of the IT asset may be determined again after the predefined response process is performed. In some embodiments, the predefined response process may mean a security patch that lowers the number of vulnerabilities. In some other embodiments, the predefined response process may mean replacing with an encryption key with a sufficient length and complexity. For example, when a security algorithm applied to an IT asset has five or more vulnerabilities, a security patch within the security algorithm may be performed so that the number of vulnerabilities is less than five, thereby lowering the security priority of the IT asset.

FIG. 4 is a diagram illustrating a vulnerability of a cryptographic element applied to an IT asset in some embodiments.

As shown in FIG. 4, in some embodiments, a plurality of cryptographic elements 50a and 50b may be applied to the IT asset 40, and each cryptographic element may have a plurality of vulnerabilities. For example, a first vulnerability 60a, a second vulnerability 60b, and a third vulnerability 60c may exist in a first algorithm, which is the first cryptographic element 50a applied to an application, which is the IT asset 40, and a fourth vulnerability 60d and a fifth vulnerability 60e may exist in a second algorithm, which is the second cryptographic element 50b.

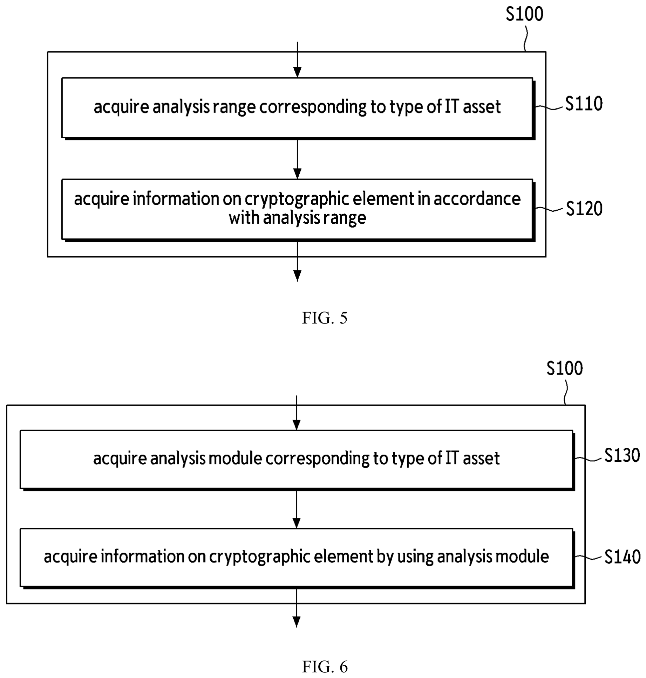

FIGS. 5 and 6 are detailed views illustrating some operations of the IT asset management method described with reference to FIG. 2.

As shown in FIG. 5, in some embodiments, an analysis range corresponding to a type of the IT asset may be acquired (S110), and information on one or more cryptographic elements applied to the IT asset may be acquired depending on the acquired analysis range (S120). The type of the IT asset may include a hardware asset, a software asset, a cloud asset, and a data asset.

In some embodiments, the analysis range may mean a range of IT asset analysis required to acquire a cryptographic element of the IT asset. In one example, in addition to application analysis, library analysis and protocol analysis may be additionally required to acquire a cryptographic element of an IT asset such as an application program. In another example, since files, codes, libraries, application programs, and the like may be included in an operating system to acquire a cryptographic element of an IT asset such as the operating system, code static analysis, code dynamic analysis, library analysis, application program analysis, protocol analysis, file analysis, firmware analysis, and the like may be additionally required. According to the present embodiments, the cryptographic element applied to the IT asset may be acquired depending on the acquired analysis range, so that unnecessary analysis may be reduced and the cryptographic element may be accurately identified.

In addition, as shown in FIG. 6, in some other embodiments, an analysis module corresponding to the type of the IT asset may be acquired (S130), and information on one or more cryptographic elements applied to the IT asset may be acquired using the acquired analysis module (S140). In some embodiments, the analysis module may mean a module for identifying the cryptographic element applied to the IT asset. For example, the analysis module is an intra-company encryption technology search module, and whether to use encryption algorithms such as AES-256, RSA-2048, and SHA-256 may be determined using the intra-company encryption technology search module. In another example, the analysis module is a network traffic encryption identification module, and whether the used version of the encryption protocol is TLS 1.2 or more may be determined using the network traffic encryption identification module. In another example, the analysis module is an intra-application cryptographic element search module, and an encryption key, a hash function, or the like may be identified in a software code or a setting file by using the intra-application cryptographic element search module. According to the present embodiments, the cryptographic element applied to the IT asset may be accurately identified using an analysis module suitable for the type of the IT asset.

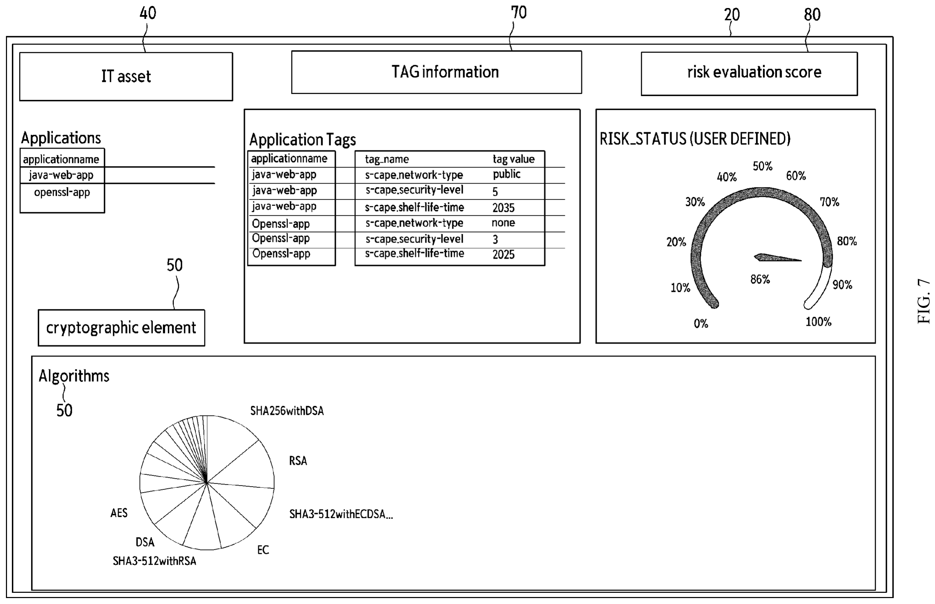

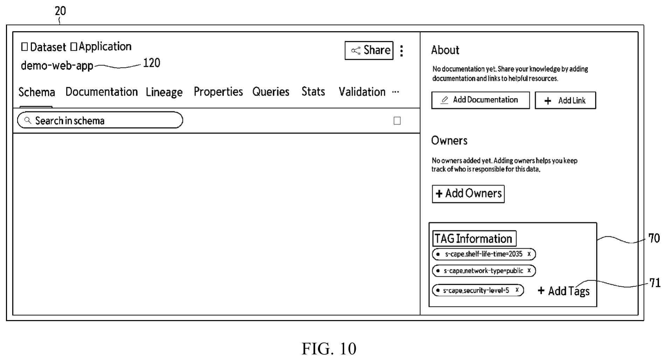

FIG. 7 is a view illustrating an example in which information related to an IT asset is output to a user terminal in some embodiments. As shown in FIG. 7, in some embodiments, an IT asset 40, a cryptographic element 50, tag information 70, and a risk evaluation score 80 may be output through a user terminal. A detailed description of the tag information 70 will be given later with reference to FIG. 10.

As shown in FIG. 7, in some embodiments, the tag information 70 and the risk evaluation score 80 may be output to the user terminal. In the present embodiments, the IT asset 40, the cryptographic element 50 applied to the IT asset 40, the tag information 70, and the risk evaluation score 80 are output to the user terminal so that the user may easily identify security vulnerability of a specific IT asset. Therefore, even though a security problem occurs in the IT asset or the cryptographic element applied to the IT asset, the user may quickly respond to the security problem.

FIG. 8 is a view illustrating an example of information on an IT asset in some embodiments.

As shown in FIG. 8, in some embodiments, an information 100 on an IT asset may include an IT asset identifier 110, an IT asset name 120, an IT asset type 130, and an IT asset service name 140.

For example, when the IT asset is DMZ, the IT asset identifier 110 turn:asset:Platform:DMZ:nginx, the IT asset name nginx, the IT asset type DMZ, and the IT asset service name S-CAPE-DEMO may be stored as the information 100 on the IT asset.

The IT asset identifier 110 is a unique value for identifying the IT asset, and may distinguish it from other IT assets. For example, the IT asset identifier 110 may be identified using a uniform resource name (URN).

The IT asset name 120 is a name corresponding to the IT asset, and may be a name directly input by the user or a name determined by a computing system that performs the IT asset management method according to the present embodiment.

The IT asset type 130 is the type of the IT asset, and may include a hardware asset, a software asset, a cloud asset, and a data asset. For example, the hardware asset may include a computing device, networking equipment, and a mobile device. The software asset may include an operating system, application programs, and the like. The cloud asset may include a cloud storage service, a cloud-based application, and the like. The data asset may include a database, a file, and the like.

In some embodiments, the IT asset service 140 may mean a service that supports efficient management and operation of IT assets.

FIG. 9 is a view illustrating an example of a cryptographic element applied to an IT asset in some embodiments.

As shown in FIG. 9, in some embodiments, the cryptographic element applied to the IT asset may include a security algorithm 210, a security protocol 230, and a security certificate.

The security algorithm 210 may mean an algorithm for securing an IT asset. For example, the security algorithm 210 may include an AES algorithm, a PBE algorithm, a ChaCha algorithm, an SHA algorithm, an RSA algorithm, and the like. In addition, as shown in FIG. 9, in some embodiments, security algorithm details 220 may include a name (applicationname) of an IT asset to which an algorithm is applied, an algorithm name (componentname), an algorithm type (primitive), an encryption function (cryptofunction), a key size (parameterset identifier), an encryption security level (classicalsecuritylevel), and quantum-resistant encryption security level (nistquantumsecuritylevel). In addition, as shown in FIG. 9, in some embodiments, security protocol details 240 may include a protocol name (componentname), and an encryption suite (ciphersuitname). In addition, as shown in FIG. 9, in some embodiments, security certificate details 250 may include a name of an IT asset (application name), a certificate format (certificateformat), a certificate name (subjectname), and a certificate valid period (notvalidafter).

In some embodiments, the information on the above-described cryptographic elements 210 to 250 may be output on a screen of the user terminal.

FIG. 10 is a view illustrating an example of tag information including characteristics of an IT asset in some embodiments.

In some embodiments, as shown in FIG. 10, the tag information 70 including characteristics of an IT asset may be output to the user terminal. Referring to FIG. 10, the IT asset name 120 and the tag information 70 including characteristics of the IT asset may be output to the user terminal.

In some embodiments, the characteristics of the IT asset may mean characteristics related to the security of the IT asset. For example, the characteristics of the IT asset may mean characteristics of how long the shelf-life-time remains. In another example, the characteristics of the IT asset may mean the usage network type of the IT asset. In another example, the characteristics of the IT asset may mean the security level of data handled by the IT asset.

In some embodiments, the tag information 70 may mean information assigned to the characteristics of the IT asset in the form of a key-value. Referring to FIG. 10, "s-cape.shelf-life-time=2035" of the tag information may mean that the shelf-life-time of the IT asset in which the IT asset name 120 is "demo-web-app" is 2035. That is, the key may be "scape.shelf-life-time" and the value may be "2035". In addition, "s-cape.network-type=public" may mean that the usage network type of the IT asset in which the IT asset name 120 is "demo-web-app" is "public". In the above case, the key corresponds to "cape.network-type" and the value corresponds to "public". In addition, "s-cape.security-level=5" may mean that the security level of data handled by the IT asset of which name 120 is "demo-web-app" is 5. In the above case, the key corresponds to "s-cape.security-level" and the value corresponds to "5".

In some embodiments, the tag information 70 may be added (71). For example, the user may add (71) the tag information 70 including characteristics of the additional IT asset.

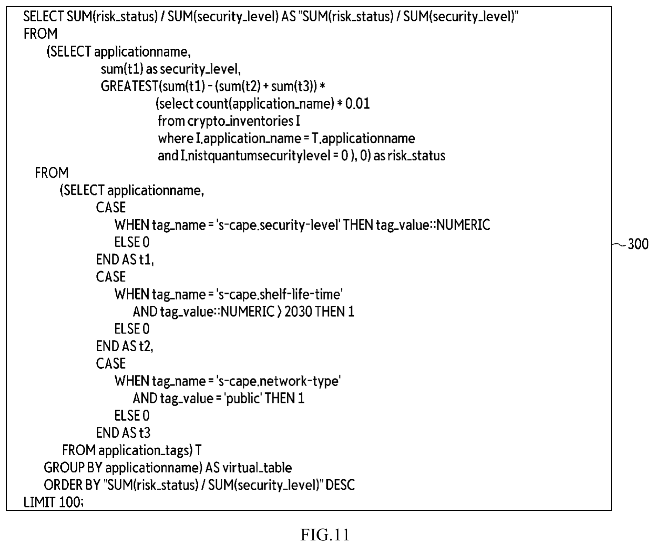

The example of the tag information has been described as above in detail with reference to FIG. 10. Hereinafter, a method of calculating the risk evaluation score will be described in more detail with reference to FIG. 11.

FIG. 11 is a view illustrating a method of calculating a risk evaluation score of an IT asset in some embodiments.

In more detail, FIG. 11 is a view illustrating a method of calculating a risk evaluation score of an IT asset in a software code in some embodiments. The software code shown in FIG. 11 is summarized as follows. 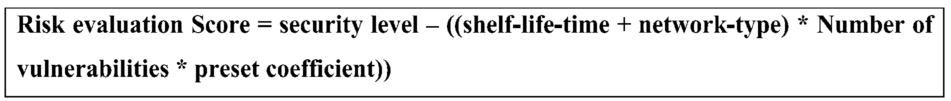 Risk evaluation Score = security level - ((shelf-life-time + network-type) * Number of vulnerabilities * preset coefficient))

That is, the risk evaluation score may mean a result acquired by subtracting a value obtained by multiplying the sum of the score corresponding to the shelf-life-time and the score corresponding to the usage network type by the number of vulnerabilities and a preset coefficient, from the score corresponding to the security level. In the above table, the security level is the security level of data handled by the IT asset, and may be a natural number of 1 or more and 10 or less. In addition, the shelf-life-time is the security safety deadline of the IT asset, which may be 0 when it has already passed based on the current time and 1 when it has not yet arrived. In addition, the network-type is the usage network type of the IT asset, which may be 0 when it is private and 1 when it is public. In addition, the number of vulnerabilities may mean the total sum of the number of security vulnerabilities included in each cryptographic element applied to the IT asset. In some embodiments, the preset coefficient may be adjusted. For example, when the importance of the IT asset increases, a new vulnerability is found in the cryptographic element applied to the IT asset, or the security threat to the IT asset increases, the preset coefficient value may be adjusted to decrease, resulting in a high risk evaluation score. As an example of how a risk evaluation score is calculated in accordance with the equation listed in the above table, when a specific IT asset has security-level=5, shelf-life-time=2035, network-type=public, and the number of vulnerabilities of 3, the risk evaluation score may be 5 - ((1 + 1) * 3 * 0.01) = 4.94.

In some embodiments, the risk evaluation score may be a consideration factor for determining the security priority of the IT asset. For example, the higher the risk evaluation score, the higher the security priority of the IT asset. In addition, in some embodiments, for IT assets having the same risk evaluation score, the security priority may be determined high in the order of high security-level. In some other embodiments, for IT assets having the same risk evaluation score, the security priority may be determined high in the order of high security-level and short shelf-life-time. In some other embodiments, for IT assets having the same risk evaluation score, the security priority in which a security-level is high, a shelf-life-time is short, and a network-type is public may be determined.

The factors for determining the security priority of IT assets have been described as above with reference to FIGS. 1 to 11. In summary, in order to determine the security priority of IT assets, the number of vulnerabilities in the cryptographic element of the IT asset, the security level of the data handled by the IT asset, the shelf-life-time that is the period during which the IT asset may be effectively maintained for security, the usage network type (public or private) of the IT asset, and the risk evaluation score of the IT asset may be used. However, it should be noted that the factors for determining the security priority of the IT asset are not limited to the above-described factors.

In some embodiments, the security priority of the IT asset may be determined using each of the above-described factors as a single factor. The larger the number of vulnerabilities of the cryptographic element, the greater the security risk, so considering this factor, the user may quickly identify vulnerabilities and respond to security threats of the IT asset. In addition, the higher the security level of data, the greater the loss or leakage of that data, so considering this factor, important data may be first protected. In addition, the shorter the shelf-life time, the faster the security of the asset may be invalidated, so considering this factor, the user may continue to monitor the security status of the asset over time. In addition, since the public network has a higher security risk than the private network, considering the network type, the user may quickly evaluate the security level of the network. In addition, the higher the risk evaluation score, the greater the security risk of the asset, so considering this factor, the user may evaluate the overall security status of the asset.

In some other embodiments, the security priority of the IT asset may be determined using two or more of the above factors. For example, the security priority of the IT asset is determined using the number of vulnerabilities of the cryptographic element and the security level, so that the user may first identify vulnerabilities of IT asset handling important data and quickly respond to security threats. In another example, the security priority of the IT asset is determined using the number of vulnerabilities of the cryptographic element and the usage network type, so that the user may first identify the vulnerabilities of the IT asset used in the public network and quickly respond to security threats. In another example, the security priority is determined using the number of vulnerabilities of the cryptographic element and the shelf-life time, so that the user may first identify the vulnerabilities of the IT asset that is likely to be invalidated in security and quickly respond to security threats. In another example, the security priority of the IT asset is determined using the number of vulnerabilities of the cryptographic element, the security level, and the usage network type, so that the user may first identify the vulnerabilities of the IT asset handling important data used in the public network and quickly respond to security threats. In another example, the security priority of the IT asset is determined using the number of vulnerabilities of the cryptographic element, the security level, the usage network type, the shelf-life-time, and the risk evaluation score, so that the user may comprehensively evaluate the security status of the IT asset and determine the security priority of the IT asset in consideration of the importance of each factor. Therefore, the overall security risk of the IT asset may be minimized using various factors for determining the security priority of the IT asset.

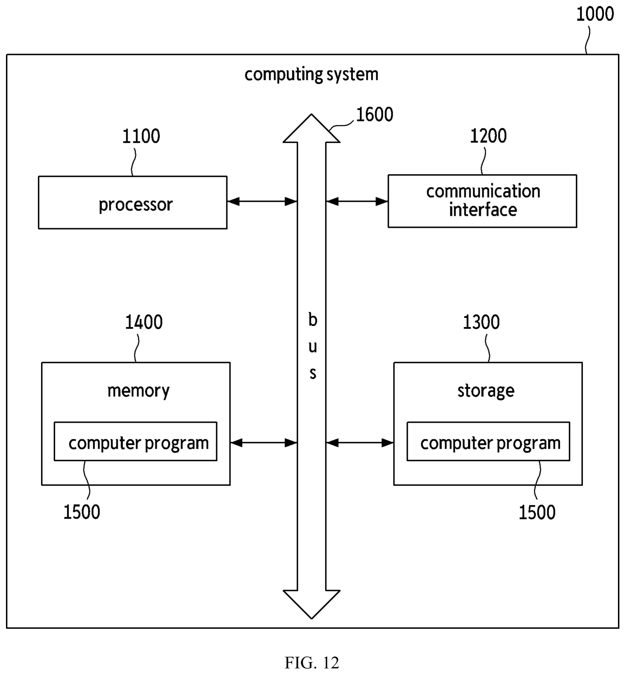

FIG. 12 is a hardware schematic diagram illustrating a computing device described in some embodiments of the present disclosure.

Referring to FIG. 12, a computing device 1000 may include one or more processors 1100, a bus 1600, a communication interface 1200, a memory 1400 for loading a computer program executed by the processor 1100, and a storage 1300 for storing the computer program 1500. In FIG. 12, only components related to the embodiments of the present disclosure are shown. Accordingly, it will be apparent to those skilled in the art to which the present disclosure pertains that the computing device may further include other generalpurpose components in addition to the components shown in FIG. 12. That is, the computing device 1000 may further include various components in addition to the components shown in FIG. 12. Also, in some cases, the computing device 1000 may be configured in a form in which some of the components shown in FIG. 12 are omitted. Hereinafter, each component of the computing device 1000 will be described. Throughout the present disclosure, the computing device 1000 and the computing system are terms that may be used interchangeably.

The processor 1100 may control the overall operation of each component of the computing device 1000. The processor 1100 may include at least one of a central processing unit (CPU), a micro processor unit (MPU), a micro controller unit (MCU), a graphic processing unit (GPU), or any type of processor well known in the technical field of the present disclosure. In addition, the processor 1100 may perform computation on at least one application or program for executing an operation/method according to the embodiments of the present disclosure. The computing device 1000 may include one or more processors.

The memory 1400 may store various types of data, commands and/or information. The memory 1400 may load one or more programs 1500 from the storage 1300 to execute the methods/operations according to the embodiments of the present disclosure. The memory 1400 may be implemented as a volatile memory such as RAM, but the present disclosure is not limited thereto.

The bus 1600 may provide a communication function between the components of the computing device 1000. The bus 1600 may be implemented as various types of buses such as an address bus, a data bus, and a control bus.

The communication interface 1200 may support wired/wireless Internet communication of the computing device 1000. The communication interface 1200 may support various communication modes other than Internet communication. To this end, the communication interface 1200 may be configured to include a communication module well known in the technical field of the present disclosure.

The storage 1300 may non-temporarily store one or more computer programs 1500. The storage 1300 may include a nonvolatile memory such as a Read Only Memory (ROM), an Erasable Programmable ROM (EPROM), an Electrically Erasable Programmable ROM (EEPROM) and a flash memory, a hard disk, a detachable disk, or any type of computerreadable recording medium well known in the technical field to which the present disclosure pertains.

The computer program 1500 may include one or more instructions to allow the processor 1100 to perform operation/methods according to various embodiments of the present disclosure when loaded into the memory 1400. That is, the processor 1100 may perform the methods/operations according to various embodiments of the present disclosure by executing one or more instructions.

For example, the computing device of FIG. 12 may be a computing device included in the IT asset management system described with reference to FIG. 1. In this case, the computing device described with reference to FIG. 12 may be configured using one or more physical servers included in a server farm based on a cloud technology such as a virtual machine. In this case, at least a portion of the processor 1100, the memory 1400, and the storage 1300 among the components shown in FIG. 12 may be virtual hardware, and the communication interface 1200 may also be configured as a virtualized networking element such as a virtual switch. The various embodiments of the present disclosure and the effects according to the embodiments have been described as above with reference to FIGS. 1 to 12. The effects according to the technical spirits of the present disclosure are not limited to the above-mentioned effects, and other effects not mentioned may be clearly understood by those skilled in the art from the following description.

The computer program 1500 according to one embodiment may include instructions of acquiring information on one or more cryptographic elements applied to an IT asset, instructions of determining the number of vulnerabilities of each of the cryptographic elements, and instructions of determining a security priority of the IT asset by using information on the number of vulnerabilities of each of the cryptographic elements applied to the IT asset.

So far, a variety of embodiments of the present disclosure and the effects according to embodiments thereof have been mentioned with reference to FIGS. 1 to 12. The effects according to the technical idea of the present disclosure are not limited to the forementioned effects, and other unmentioned effects may be clearly understood by those skilled in the art from the description of the specification.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. An Information Technology (IT) asset management method, which is performed by a computing system, the IT asset management method comprising:
acquiring information on one or more cryptographic elements applied to an IT asset;
determining a number of vulnerabilities of each of the one or more cryptographic elements; and
determining a security priority of the IT asset by using information on the number of vulnerabilities of each of the one or more cryptographic elements applied to the IT asset.

2. The IT asset management method of claim 1, further comprising acquiring a security level of data handled by the IT asset,
wherein the determining the security priority includes determining the security priority of the IT asset by further using the security level.

3. The IT asset management method of claim 2, wherein the determining the security priority includes acquiring a risk evaluation score of the IT asset by using the information on the number of vulnerabilities of each cryptographic element applied to the IT asset and the security level, and determining a relatively high security priority of an IT asset handling data having a high security level with respect to IT assets having the same risk evaluation score.

4. The IT asset management method of claim 1, further comprising acquiring a usage network type of the IT asset,
wherein the determining the security priority includes determining the security priority of the IT asset by further using the usage network type of the IT asset, and
wherein the usage network type includes a private network and a public network.

5. The IT asset management method of claim 4, wherein the determining the security priority includes acquiring a risk evaluation score of the IT asset by using the information on the number of vulnerabilities of each cryptographic element applied to the IT asset and the usage network type of the IT asset, and determining a relatively high security priority of the IT asset, which uses the public network, with respect to IT assets having the same risk evaluation score.

6. The IT asset management method of claim 1, further comprising acquiring a shelf-life-time of the IT asset, the shelf-life-time being a deadline for the IT asset to be effectively maintained in security,
wherein the determining the security priority includes determining the security priority of the IT asset by further using the shelf-life-time of the IT asset.

7. The IT asset management method of claim 6, wherein the determining the security priority includes acquiring a risk evaluation score of the IT asset by using the information on the number of vulnerabilities of each cryptographic element applied to the IT asset and the shelf-life-time of the IT asset, and determining a relatively high security priority of the IT asset with a short shelf-life-time with respect to IT assets having the same risk evaluation score.

8. The IT asset management method of claim 1, further comprising acquiring a security level of data handled by the IT asset, a usage network type of the IT asset, and a shelf-life-time of the IT asset, the shelf-life-time being a deadline for the IT asset to be effectively maintained in security,
wherein the determining the security priority includes acquiring a risk evaluation score of the IT asset, the risk evaluation score meaning a result acquired by subtracting a value obtained by multiplying a sum value of a score corresponding to the shelf-life-time and a score corresponding to the usage network type by the number of vulnerabilities and a preset coefficient, from a score corresponding to the security level, and
wherein the usage network type includes a private network and a public network.

9. The IT asset management method of claim 1, wherein the acquiring the information on one or more cryptographic elements includes:
acquiring an analysis range corresponding to a type of the IT asset; and
acquiring the information on the one or more cryptographic elements applied to the IT asset in accordance with the acquired analysis range.

10. The IT asset management method of claim 1, wherein the acquiring the information on one or more cryptographic elements includes:
acquiring an analysis module corresponding to a type of the IT asset; and
acquiring the information on the one or more cryptographic elements applied to the IT asset by using the acquired analysis module.

11. The IT asset management method of claim 1, further comprising:
replacing a cryptographic element having the determined number of vulnerabilities of a reference value or more with a different cryptographic element when the determined number of vulnerabilities is the reference value or more; and
re-determining the security priority of the IT asset by using information on the number of vulnerabilities of the replaced cryptographic element.

12. The IT asset management method of claim 1, further comprising:
replacing at least one cryptographic element applied to the IT asset with a different cryptographic element when a total sum of the determined number of vulnerabilities of each of the one or more cryptographic elements is a reference value or more; and
re-determining the security priority of the IT asset by using information on the vulnerability of the replaced cryptographic element.

13. The IT asset management method of claim 1, further comprising:
automatically performing a predefined response process for a cryptographic element having the number of vulnerabilities greater than or equal to a reference value when the determined number of vulnerabilities is greater than or equal to the reference value; and
re-determining the security priority of the IT asset after the predefined response process is performed.

14. An Information Technology (IT) asset management system comprising:
a processor;
a network interface;
a memory; and
a computer program loaded into the memory and executed by the processor,
wherein the computer program includes:
instructions of acquiring information on one or more cryptographic elements applied to an IT asset;
instructions of determining a number of vulnerabilities of each of the one or more cryptographic elements; and
instructions of determining a security priority of the IT asset by using information on the number of vulnerabilities of each of the one or more cryptographic elements applied to the IT asset.

15. An Information Technology (IT) asset management system in a computing system, the IT asset management system comprising:
an IT asset storage system storing an IT set and one or more cryptographic elements to which the IT asset is applied; and
a cryptographic element management system determining a security priority of the IT asset,
wherein the cryptographic element management system acquires information on one or more cryptographic elements applied to the IT asset,
determines a number of vulnerabilities of each of the one or more cryptographic elements, and
determines the security priority of the IT asset by using information on the number of vulnerabilities of each of the one or more cryptographic elements applied to the IT asset.
